Europäisches Patentamt

**European Patent Office**

Office européen des brevets

(11) Numéro de publication: **0 057 621**
**B1**

(12) **FASCICULE DE BREVET EUROPEEN**

(45) Date de publication du fascicule du brevet:
21.11.84

(51) Int. Cl.³: **G 10 K 11/16**

(21) Numéro de dépôt: **82400059.0**

(22) Date de dépôt: **14.01.82**

(54) **Garniture insonorisante pour conduit de gaz notamment pour veine de soufflante de turboréacteur et outillage pour sa fabrication.**

(30) Priorité: **29.01.81 FR 8101670**

(43) Date de publication de la demande:
**11.08.82 Bulletin 82/32**

(45) Mention de la délivrance du brevet:
**21.11.84 Bulletin 84/47**

(84) Etats contractants désignés:
**DE FR GB SE**

(56) Documents cités:
**DE - B - 1 086 033**
**FR - A - 2 143 276**
**GB - A - 1 166 843**
**GB - A - 2 019 937**
**GB - A - 2 019 993**
**US - A - 3 211 253**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Forestier, Alexandre, 451, rue du Tertereau, F-77000 Vaux le Penil (FR)**
Inventeur: **Pluquet, Alain Alfred, 5, rue Gabriel Houdard, F-77000 Melun (FR)**
Inventeur: **Rosa, Roger André, 43, rue Emile Zola, F-91420 Morangis (FR)**
Inventeur: **Tabet, Mansour, 1, rue Augereau, F-77000 Melun (FR)**
Inventeur: **Teysseyre, Pierre Michel, 1ter, avenue de la Terrasse, F-91260 Juvisy sur Orge (FR)**

(74) Mandataire: **Moinat, François et al, S.N.E.C.M.A. Service des Brevets Boîte Postale 81, F-91003 Evry Cedex (FR)**

## Description

L'invention concerne une garniture insonorisante pour conduit de gaz. Elle concerne aussi un outillage de fabrication d'éléments de cette garniture.

La garniture de l'invention convient notamment, en raison de sa faible épaisseur, de sa légèreté, de sa bonne tenue aux impacts et de la facilité de sa mise en place, à l'insonorisation des cartes amont et aval de turboréacteur à double flux. D'une façon générale, elle peut être avantageusement utilisée chaque fois qu'il s'agit de diminuer le niveau du bruit engendré dans une veine de grand diamètre par un flux de gaz dont la température est relativement basse.

La garniture de l'invention est du genre constitué par la juxtaposition de panneaux composites insonorisants dans l'épaisseur desquels sont ménagées des cavités résonnantes qui communiquent avec le flux de gaz par une pluralité d'évents. On connaît déjà de tels panneaux composites, notamment par le brevet fançais publié sous le No. FR-A-2 201 010. Ils comportent deux feuilles en regard dont l'une, en contact avec le flux de gaz, est perforée. Ces deux feuilles sont entretoisées par une feuille ondulée dont les ondes délimitent les cavités résonnantes. Les trois feuilles sont métalliques et sont assemblées rigidement par brasage. De tels panneaux composites doivent avoir des rayons de courbure précis car leur rigidité empêche de compenser leurs défauts dimensionnels par une déformation au montage. Cette rigidité est encore plus gênante lorsque la veine est de grande section. La paroi de la veine présente en effet elle-même des défauts de courbure. Le problème peut être résolu par l'interposition d'un matelas en matériau souple et poreux, comme on l'a déjà proposé dans le brevet français au nom du demandeur publié sous le No. FR-A-2 396 868. Mais cette solution ne convient qu'à des veines de section relativement faible. Sinon la garniture devient trop encombrante et trop pesante.

La garniture insonorisante selon l'invention est définie par les caractéristiques techniques recitées à la revendication 1. La garniture insonorisante de l'invention est exemple de ces inconvénients. Ses éléments sont légers et d'un montage facile. Sa fabrication est rapide. Elle comprend d'une part une pluralité de panneaux perforés rigides et minces juxtaposés par tuilage (c'est-à-dire que l'un des bords d'un panneau recouvre le bord d'un panneau adjacent) et d'autre part, entre chaque panneau perforé et la paroi à insonoriser, une couche intermédiaire conformée pour délimiter avec ledit panneau perforé une pluralité de cavités acoustiques résonnantes dont les évents acoustiques sont constitués par les orifices du panneau perforé. Elle est caractérisée en ce que chaque panneau perforé est muni de moyens de fixation directe à la paroi ménageant un intervalle entre celle-ci et ce panneau perforé et en ce que la couche intermédiaire est un panneau intermédiaire déformable logé et serré dans cet intervalle.

La relative flexibilité des panneaux perforés (due à leur minceur) et la déformabilité des panneaux intermédiaires permettent à la garniture de s'adapter, lors du montage, aux défauts de conformation de la paroi de la veine.

Mais la garniture de l'invention présente bien d'autres caractéristiques avantageuses.

On sait que les fréquences propres de résonance d'une cavité dépendent de son évent ou de ses évents. Il est connu d'accroître la résistance acoustique d'un évent en lui conférant une forme tabulaire.

Plus cette résistance acoustique contribue pour une grande part à l'impédance acoustique de la cavité, plus les bandes de fréquences de résonance de celle-ci s'élargissent et plus la cavité devient capable d'absorber des bruits dans des bandes de fréquences qui s'écartent sensiblement de part et d'autre de ses fréquences nominales de résonance. Pour obtenir cet effet avantageux malgré la minceur des panneaux perforés de l'invention, chacun de ces panneaux porte au droit de chacun de ses orifices, sur sa face regardant la paroi, un court manchon tubulaire dont l'alésage prolonge ledit orifice pour former un évent tubulaire.

Avantageusement, chaque panneau perforé est constitué par une feuille mince en résine polymère moulée armée de fibres minérales ou organiques. Non seulement il est ainsi léger, relativement rigide et présente de bonnes caractéristiques d'allongement qui lui permettent d'accepter des déformations importantes sous impacts, mais en outre, comme on le verra, les manchons tubulaires peuvent venir de moulage avec la feuille. Leur accrochage à cette feuille est d'autant plus résistant que, conformément à l'invention, les fibres de l'armature pénètrent dans lesdits manchons.

D'autres dispositions avantageuses de l'invention concernent le panneau intermédiaire logé entre la paroi et chaque panneau perforé. Afin qu'un tel panneau intermédiaire soit à la fois relativement souple et capable de former avec le panneau perforé des cavités résonnantes étanches entre elles, l'invention prévoit les dispositions suivantes:

— le panneau intermédiaire est constitué d'une feuille mince de résine polymère (de préférence élastomère) appliquée contre la paroi de la veine par le panneau perforé et porte des nervures dont les bords s'appliquent contre de panneau perforé et qui délimitent les cavités résonnantes;
— afin d'éviter que le panneau perforé n'écrase les bords des nervures (l'écrasement nuirait à l'étanchéité entre les cavités limitrophes), ces bords de nervures sont des bords tombés; cette disposition devient particulièrement avantageuse lorsque la garniture équipe une veine de soufflante de turboréacteur car la déformabilité de ces bords tombès accroît sensiblement la capacité d'absorption d'énergie mécanique de ladite garniture car, à la différence des structures connues, le panneau intermédiaire nervuré n'est pas lié intimement au panneau perforé et il peut suivre librement les déformations et reprendre sa forme initiale; le panneau perforé résiste beaucoup mieux aux martèlements répétés par les grêlons ou les graviers;

— pour faciliter l'application du panneau intermédiaire contre la paroi, ce panneau intermédiaire porte de courtes nervures sur la face qui regarde ladite paroi;

— le panneau intermédiaire est monté avec précontrainte, ce qui procure par conséquent, un certain amortissement du panneau perforé aux vibrations acoustiques.

Quant à l'outillage de l'invention, destiné à la réalisation de panneaux perforés constitués, conformément à l'invention, par une feuille mince en résine polymère moulée armée de fibres minérales ou organiques, il comprend:

— une partie fixe de moule et une partie mobile de moule à insérer entre les plateaux d'une presse chauffante et délimitant une empreinte de moulage,

— une pluralité d'épingles destinées à ménager les orifices du panneau au cours de ces épingles traversant alors l'une des parties de moule par un passage d'épingle, traversant l'empreinte et pénétrant dans l'autre partie du moule par un autre passage d'épingle.

Il est caractérisé:

— en ce que des chambrages sont ménagés au débouché dans l'empreinte des passages d'épingles de l'une des parties de moule pour former les empreintes de moulage des manchons tubulaires,

— en ce que les épingles, en acier, sont revêtues d'une couche d'oxyde favorisant l'accrochage d'un agent de démoulage.

L'invention sera mieux comprise par la lecture des descriptions qui suivent et qui sont relatives à des exemples de réalisation de la garniture de l'invention et de réalisation de l'outillage. Ces descriptions se réfèrent aux dessins annexés dans lesquels:

la figure 1 est une section partielle transversale à grande échelle, prise dans le plan 1-1 de la figure 2, d'une veine de soufflante équipée d'une garniture conforme à l'invention,

la figure 2 est une section partielle transversale à même échelle, prise dans le plan 2-2 de la figure 1, de ladite veine de soufflante,

la figure 3 est une section partielle du moule destiné à réaliser les panneaux perforés de ladite garniture,

la figure 4 est un détail agrandi de la figure 3,

la figure 5 est une section partielle transversale analogue à la figure 1 montrant en variante un détail de la figure 1.

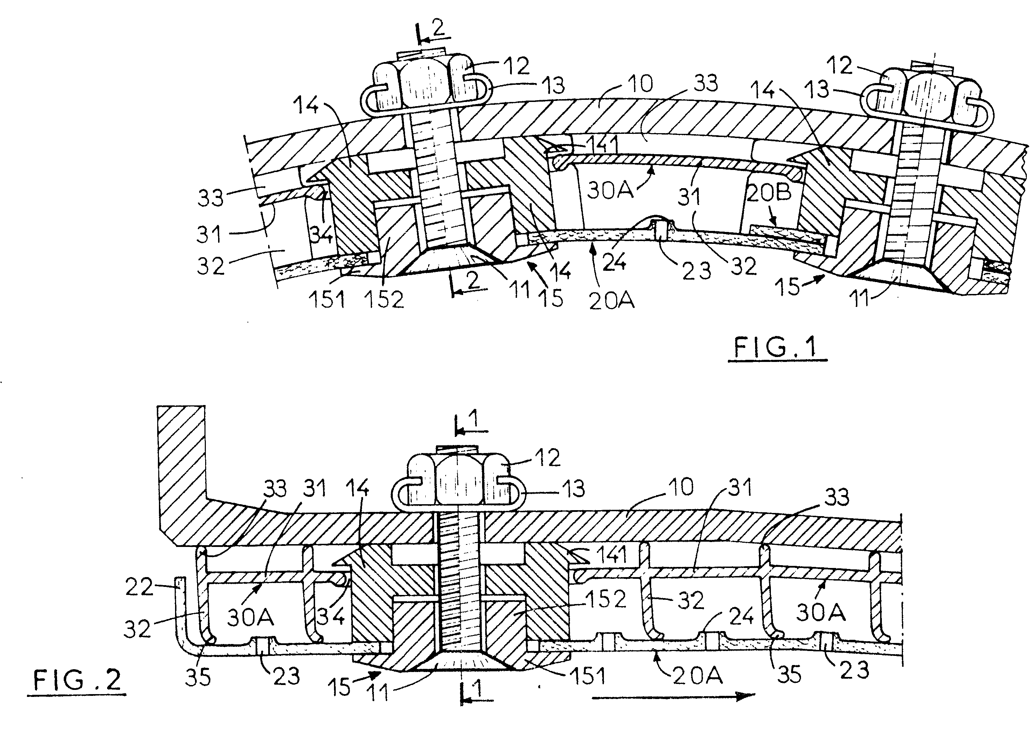

On considère simultanément les figures 1 et 2. La garniture de l'invention destinée à insonoriser la paroi 10 d'une veine de soufflante, comprend d'une part une pluralité de panneaux minces perforés 20 (20A, 220B, etc.) fixés à la paroi 10 et à distance de celle-ci et d'autre part une pluralité de panneaux déformables nervurés 30 (un seul panneau déformable 30A étant représenté) dont chacun est logé et maintenu dans l'intervalles existant entre la virole 10 et un panneau perforé 20.

La figure 1 ne montre, vue de l'avent, que la zone de droite du panneau perforé 20A et le bord gauche du panneau suivant 20B. Ce bord de 20B, constitué par un soyage s'engage sur le bord droit de 20A de telle sorte que la paroi perforée constituée par le tuilage des panneaux 20 est quasi-continue.

Les organes de fixation de chaque panneau 20 à la paroi 10 comprennent des boulons 11 à tête fraisée (munis d'écrous 12 et de rondelles e freinage 13), des entretoises 14 et des rondelles de logement de tête de boulon 15. Chacune de ces dernières comporte une collerette 151 qui s'appuie sur le panneau 20 et un corps 152 qui s'engage dans un logement de centrage ménagé dans l'entretoise 14 associée. Les rondelles 15 et les entretoises 14 sont de préférence collées sur le panneau 20. Celui-ci est ainsi maintenu rigidement à distance de la paroi 10.

Les boulons 11 disposés dans une même section de veine sont en réalité davantage éloignés les uns des autres que ne le montre la figure 1. Les deux boulons de cette figure sont arbitrairement rapprochés pour illustrer respectivement le cas (boulon 11 de gauche) où un boulon assure la fixation d'une région d'un seul panneau 20 (ici 20A) et le cas où (boulon 11 de droite) un même boulon assure la fixation simultanée des bords de deux panneaux 20 (ici 20A et 20B).

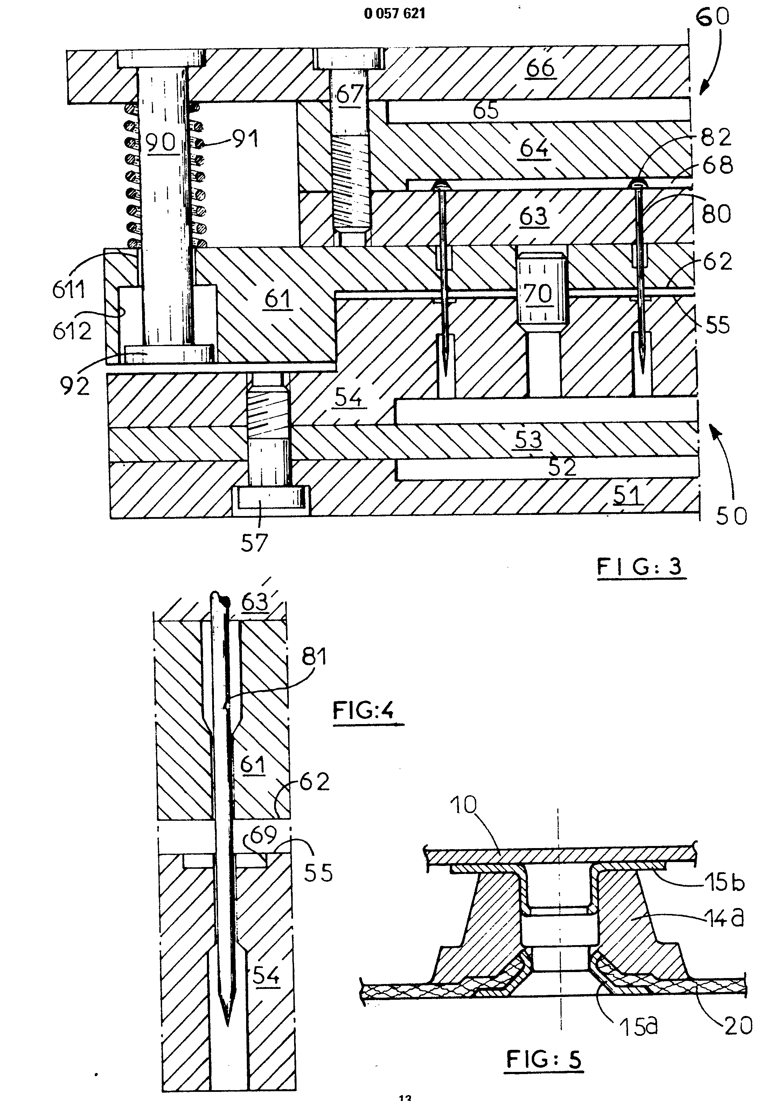

La figure 5 montre une variante selon l'invention du mode de fixation de chaque panneau 20 à la paroi 10, en maintenant rigidement à distance chaque panneau de la paroi. Les organes de fixation en conservant les boulons 11, écrous 12, rondelles de freinage 13 décrits ci-dessus et représentés aux figures 1 et 2 comprennent en outre des entretoises 14a, des premières coupelles 15a formant logements des têtes de boulons et des secondes coupelles 15b. Dans un mode préférentiel des réalisation, les entretoises 14a sont moulées dans un matériau composite et leur polymérisation est effectuée en place en même temps que la polymérisation du panneau 20 lui-même. Les coupelles 15a et 15b sont métalliques et les premières coupelles 15a sont mises en place sur le panneau 20 avent polymérisation tandis que les secondes coupelles 15b sont emboîtées dans les entretoises 14a au moment du montage.

De même que les autres panneaux nervurés 30, le panneau 30A logé entre la virole 10 et le panneau perforé 20A comporte une âme 31 en forme de lame, une pluralité de nervures d'appui 32 disposées du côté du panneau perforé 20A et une pluralité de nervures d'appui 33 disposées du côté de la virole 10. Des trous tels que 34 permettent le passage des entretoises 14. Celles-ci sont munies d'une collerette 141 qui s'oppose au débattement de la lamee 31 vers la virole 10. Les nervures 33 sont très courtes car leur seule fonction est d'assurer des contracts francs entre la virole 10 et les panneaux 30. On remarque que le panneau 20A comporte, de même que les autres panneaux 20 de la même section de veine, un bord amont tombé 22 en vue de protéger les panneaux 30.

Les âmes 31, les nervures 32 et les panneaux 20 délimitent ainsi une succession de cavités annulaires éventuellement divisées par des nervures des panneaux 30 qui sont orientées selon des plans axiaux de la veine et qui ne sont pas représentées. Chacune de ces cavités communique avec la veine (flèche de la fig. 2) par une pluralité de petits orifices 23 qui constituent autant d'évents acoustiques.

Les panneaux 20, qui doivent être à la fis minces et rigides, sont par exemple faits d'une résine époxyde armée de fibres de verre (empilage de mats pré-imprégnés).

Les panneaux nervurés 30, qui ne doivent pas être détériorés par le serrage que leur impose le montage, sont faits d'un mélange élastomère-plastomère tel que l'ABS (acrylonitrilebutadiène-styrène).

On examine maintenant d'autres dispositions qui caractérisent la garniture des figures 1 et 2.

La première consiste dans la présence, au droit de chaque perforation 23, d'un court manchon 24 qui est disposé sur la face de chaque panneau 20 qui regarde le panneau nervuré 30 et la virole 10 et dont l'orifice prolonge la perforation 23.

La deuxième de ces dispositions consiste en ce que les bords 35 des nerures 32 en contact avec le panneau 20 correspondant sont des bords tombés.

On notera que les panneaux nervurés 30 sont maintenus en position uniquement par les entretoises 14, sans liaison des panneaux 20, ni avec la virole 10.

On voit aussi dans les figures 1 et 2 que les manchons 24 sont renforcés par des extrémités de fibres de l'armature. On verra plus loin comment ce résultat est obtenu.

Les avantages e ces diverses dispositions ont été développés et justifiés au début de la présente description. Il est donc inutile d'y revenir.

On donne ci-après à titre d'exemple quelques dimensions caractéristiques, en millimètres, pour une garniture acoustique équipant un carter de soufflante d'un diamètre d'environ 1700 mm.

— épaisseur des panneaux perforés 20 : 1,5 à 1,9 mm
— épaisseur des âmes 31 des panneaux nervurés 30 : 0,7 à 1 mm
— hauteur des nervures 32 : 6,5 à 7 mm
— longueur des évents 23 : 2 à 5 mm selon les fréquences acoustiques à absorber.

On vérifie ainsi que, en raison de la nature des matériaux mis en oeuvre et des valeurs des épaisseurs utilisées, la garniture de l'invention est extrêmement légère. Elle est en outre dotée d'un excellent coefficient d'amortissement mécanique et acoustique.

On décrit maintenant, en référence aux figures 3 et 4, l'outillage de moulage conforme à l'invention pour la réalisation des panneaux perforés 20 (figures 1 et 2). Cet outillage est destiné à être placé entre les plateaux d'une presse chauffante, non représentée. D'une façon générale, on ne mentionnera pas, bien qu'ils soient nécessaires, des organes ou pièces (sondes de mesure de température, pions de centrage, joints d'étanchéité, etc.) dont la description n'apporterait rien à la compréhension du fonctionnement de l'outillage. Celui-ci comporte, pour délimiter l'empreinte de moulage, une partie fixe de moule 50 et une partie mobile 60.

La partie fixe 50 est constituée par l'assemblage des éléments métalliques suivants:

— une platine réfrigérante comprenant, de bas en haut, d'une part une plaque 51 dans laquelle est ménagée une cavité laminaire de circulation d'eau 52, d'autre part une contreplaque d'étanchéité 53,
— une forme de moulage (ou matrice) 54 qui repose sur la contreplaque 53 et dont la face supérieure 55 délimite la paroi inférieure de l'empreinte de moulage.

Ces éléments sont assemblés au moyen de vis 57.

La partie mobile 60 comprend, de bas en haut, les éléments métalliques suivants:

— une contre-forme de moulage (ou poinçon) 61 qui délimite par sa face 62 la paroi supérieure de l'empreinte de moulage,
— une plaque-support d'épingles 63,
— une platine réfrigérante comprenant, d'une part, une plaque 64 dans la face supérieure de laquelle est ménagée une cavité laminaire de circulation d'eau 65, d'autre part une contreplaque de fermeture 66.

La plaque 63, la plaque 64 et la contre-plaque 66 sont assemblées au moyen de vis 67.

Les orifices de passage des corps de rondelles 152 (fig. 1 & 2) sont ménagés au moyen de noyaux 70 emmanchés à force dans des alésages de la forme 54 et pouvant coulisser dans des alésages de la contre-forme 61.

Pour ménager les évents 23 (Fig. 1 & 2), l'outillage comporte en outre une pluralité d'épingles 80 dont les corps 81 traversent, pa des alésages ménagés à cet effet, la plaque support 63 et la contre-forme 61. Ces épingles sont suspendues par leurs têtes 82 à la face supérieure de la plaque 63.

Ces têtes sont logées dans un chambrage 68 ménagé dans la face inférieure de la plaque 64. L'épaisseur de ce chambrage est juste suffisante pour les loger les pincer.

L'outillage comporte en outre des colonnettes 90 encastrées dans la plaque 66 et coulissant dans des alésages 661 ménagés dans l'épaisseur de la contre-forme 61. Des ressorts de compression 91 insérés outour de ces colonnettes éloignent les plaques 63, 64 et 66 de la contre-forme 61 lorsque l'outillage n'est pas comprimé par la presse. Les colonnettes 90 comportent des pieds 92, d'un diamètre supérieur à celui de leur corps. Ces pieds coulissent dans des chambrages 612 aménagés dans la contre-forme 61. Ils limitent la course ascendante des colonnettes. Cette cource est telle et la longueur des épingles 80 est telle que les extrémités des épingles s'engagent (lorsque l'outillage est comprimé) dans des alésages ménagés dans la forme 54 et que lesdites extrémités ne ressortent pas de la face d'empreinte de la contre-forme 61 lorsque les ressorts 90 éloignent au maximum les plaques 63, 64 et 66 de la contreforme 61.

Conformément à l'invention:

— des chambrages 69 peu profonds sont ménagés dans la paroi inférieure 55 au débouché de chaque alésage de passage d'épingles; ils constituent les empreintes de moulage des manchons 24 (fig. 1 & 2);
— les corps 81 des épingles 80 (en acier) sont oxydés superficiellement; la couche d'oxyde ainsi créée favorise l'accrochage de l'agent de démoulage (voir plus loin) destiné à permettre l'extraction des épingles après la polymérisation de la résine.

L'outillage comporte en outre quatre vérins auxiliaires (non représentés) qui sont mis en place entre les plaque 51 et 66 afin de permettre la séparation des deux parties de moule après polymérisation.

On va maintenant énumérer les phases principales du procédé de réalisation d'un panneau perforé. Préalablement à leur utilisation, les épingles 80 ont subi un traitement thermique d'oxydation sous atmosphère d'argon humide (500°C pendant quatre heures) destiné à former la couche d'accrochage.

### 1. Préparation de l'outillage

Après nettoyage, les faces d'empreinte du moule et les épingles sont enduites, par projection à la bombe, d'un agent de démoulage sont alors fixées par un chauffage de une heure à 150°C.

Le moule ouvert est placé sur le plateau inférieur de la presse. Les deux faces de l'empreinte sont maintenues en permanence à environ 135°C, par exemple au moyen de jets d'air chaud.

### 2. Préparation et mise en place de l'ébauche de moulage

Cette ébauche comprend:

— un empilement de couches prédécoupées de mat pré-imprégné (feutre de verre à fibres courtes + résine époxyde);
— de part et d'autre de l'empilement, une couche de tissu de verre silione destiné à conférer au panneau l'état de surface désirable;
— contre la face de l'ébauche à disposer du côté de la paroi supérieure de l'empreinte (face de pénétration des épingles 80), une toile de délaminage séparée de l'ébauche par film d'étanchéité en polyamide; ce film est destiné à empêcher le ressuage de la résine autour des épingles au cours du pressage et du chauffage.

L'ébauche est mise en place et centrée sur la partie inférieure 50 du moule.

### 3. Fermeture du moule et moulage

La fermeture du moule se fait en deux temps. Lorsque la partie mobile 60 est appliquée contre la partie fixe 50, les ressorts 91 maintiennent (par l'intermédiaire des plaques 66 et 64), la plaque-support 63 éloignée de la contre-forme 61. Les épingles 80 ne ressortent pas encore de la face 62. C'est seulement lorsque la contre-forme 61 est appliquée par la presse contre la forme 54 que les ressorts 91 cèdent sous la pression de la presse et que les épingles 80 pénètrent dans la forme 54 en traversant l'empreinte. Les fibres ne sont pas rompues par la pénétration des épingles, mais seulement écartées. Elles sont réparties de part et d'autre de l'orifice et foisonnent dans les chambres 69 pour constituer les armatures des manchons 24 (fig. 1 & 2), assurant la continuité pour le passage des efforts et garantissant la bonne tenue du panneau. Les plateaux chauffants de la presse maintiennent la pression pendant par exemple 45 minutes et la température de l'ensemble du moule à 135°C.

### 4. Démoulage

Puis un courant d'eau est alors admis dans les cavités 52 et 65 pour refoidir les faces de l'empreinte à environ 90°C. Le plateau supérieur de la presse est élévé et la plaque 63 soulève les épingles 80 qui s'escamotent dans la contre-forme 61. La séparation de la forme 54 et de la contreforme est réalisée au moyen des vérins auxiliaires. Le panneau moulé est extrait et, s'il y a lieu, placé sur un conformateur pour être ramené à la température ambiante.

### 5. Finition

Le panneau refroidi est ébarbé. Les rondelles 15 et les entretoises 14 (fig. 1 & 2) y sont collées.

On procède enfin à l'application de couches de peinture anti-érosion.

**Revendication**

1. Garniture insonorisante appliquée contre la paroi d'une veine de gaz, du genre comprenant d'une part une pluralité de panneaux minces perforés juxtaposés par tuilage et d'autre part, entre ladite paroi et chacun desdits panneaux pereforés, une couche intermédiaire conformée pour délimiter avec ledit panneau perforé une pluralité de cavités acoustiques résonnantes dont les évents acoustiques sont constitués par les orifices du panneau perforé, caractérisée en ce que, pour obtenir une garniture à la fois légère et facile à mettre en place, chaque panneau mince perforé (20) est muni de moyens de fixation directe (11, 12, 13, 14, 15) à la paroi (10) ménageant un intervalle entre celle-ci et ce panneau perforé et en ce que la couche intermédiaire est un panneau intermédiaire (30) déformable, logé et serré dans ledit intervalle.

2. Garniture insonorisante selon la revendication 1 comprenant une pluralité de panneaux perforés (20) portant chacun, afin d'accroître la résistance acoustique de ses orifices (23), sur sa face regardant la paroi (10) et au droit de chacun de ces orifices (23) un court manchon tubulaire (24) dont l'alésage prolonge ledit orifice pour former un évent tubulaire, caractérisée en ce que, pour qu'il soit à la fois léger, rigide, d'une fabrication rapide, et qu'il présente d'allongement qui lui permettent d'accepter des déformations importantes sous impacts, chaque panneau perforé (20) est constitué d'une feuille mince en résine polymère moulée armée de fibres minérales ou organiques, les manchons (24) étant venus de moulage avec ladite feuille et, afin d'éviter tout risque de fissuration entre chaque manchon (24) et la feuille du panneau perforé (20), des fibres de l'armature de celle-ci pénétrant dans l'épaisseur du manchon.

3. Garniture insonorisante selon la revendication 2, caractérisée en ce que l'armature du panneau perforé (20) est constituée par un empilement de couches de feutre de fibres minérales ou organiques.

4. Garniture insonorisante selon l'une quelconque des revendication 2 et 3, caractérisée en ce que chaque panneau perforé (20) porte, sur sa face regardant la paroi (10) des entretoises (14, 14a) pour maintenir l'espace nécessaire entre ledit panneau et ladite paroi et permettre le passage de boulons de fixation (11).

5. Garniture insonorisante selon la revendication 4, caractérisée en ce que chaque panneau perforé (20) porte, sur la face en contact avec la veine de gaz, des rondelles collées (15) qui traversent l'épaisseur du panneau, pénètrent dans les entretoises (14) et s'appuient sur ladite face opposée par des épaulements de faible épaisseur (151), lesdits épaulements comportant des fraisures permettant le logement de têtes de boulons à tête fraisée.

6. Garniture insonorisante selon la revendication 4, caractérisée en ce que les entretoises (14a) en matériau composite moulé sont polymérisées en place en même temps que la polymérisation du panneau perforé (20), en ce que chaque panneau perforé (20) porte, sur la face en contact avec la veine de gaz, de premières coupelles métalliques (15a) qui traversent l'épaisseur du panneau, s'appuient à une extrémité sur les entretoises (14a) et ont une forme permettant le logement de têtes de boulons à tête fraisée et en ce que de secondes coupelles métalliques (15b) pénètrent dans les entretoises (14a) et viennent en appui sur le panneau intermédiaire (30).

7. Garniture insonorisante selon la revendication 1, caractérisée en ce que, pour qu'il soit léger et facile à serrer entre la paroi (10) et le panneau perforé (20), chaque panneau intermédiaire (30) est constitué d'une feuille mince de résine polymère (31) s'appliquant contre la paroi et portant des nervures (32) dont les extrémités s'appliquent contre le panneau perforé, ces nervures délimitant les cavités résonnantes.

8. Garniture insonorisante selon la revendication 7, caractérisée en ce que, pour assurer un bon contact entre lesdites nervures (32) et le panneau perforé (20), pour accroître la résistance de celui-ci au martèlement par des corps étrangers pénétrant dans la veine et pour éviter l'écrasement des nervures au montage, les bords de ces nervures (32) sont des bords tombés (35).

9. Garniture insonorisante selon la revendication 7 ou la revendication 8, caractérisée en ce que, pour faciliter son serrage lors du montage, chaque panneau intermédiaire (30) s'appuie sur la paroi (10) par de courtes nervures (33).

10. Outillage pour le moulage d'un panneau perforé selon la revendication 2, comprenant:

— une partie fixe de moule (50) et une partie mobile de moule (60) à insérer entre les plateaux d'une presse chauffante et délimitant une empreinte de moulage,
— une pluralité d'épingles (80) destinées à ménager les orifices du panneau au cours du moulage lorsque le moule est complètement fermé, chacune de ces épingles traversant alors l'une des parties de moule par un passage d'épingle, traversant l'empreinte et pénétrant dans l'autre partie du moule par un autre passage d'épingle, caractérisé en ce que des chambrages (69) sont ménagés au débouché dans l'empreinte des passages d'épingles de l'une des parties du moule pour former les empreintes de moulage des manchons tubulaires (24).

11. Outillage selon la revendication 10, caractérisé en ce que les épingles (80), en acier, sont revêtues d'une couche superficielle d'oxyde pour favoriser l'accrochage d'un agent de démoulage.

12. Outillage selon la revendication 10 ou la revendication 11, caractérisé en ce qu'il comporte en outre des moyens (63, 90, 91) pour que, dans une position intermédiaire de fermeture, les deux parties de moule (50) et (60) soient appliquées l'une contre l'autre sans que les épingles (80) ne pénètrent dans l'empreinte.

13. Veine de soufflante de turboréacteur, caractérisée en ce qu'elle est munie d'une garniture insonorisante conforme à l'une quelconque des revedications 1 à 9.

**Patentansprüche**

1. Schalldämpfvorrichtung, die an der Wand einer Gasleitung angebracht ist, einerseits mit einer Mehrzahl von dachziegelartig nebeneinandergelegten, gelochten dünnen Platten und andererseits mit einer zwischen der Wand und der jeweiligen gelochten Platte befindlichen Zwischenschicht, die so ausgebildet ist, daß sie zusammen mit der gelochten Platte eine Mehrzahl von akustischen, mitschwingenden Hohlräumen abgrenzt, deren Schallkanäle durch die Öffnungen der gelochten Platte gebildet werden, dadurch gekennzeichnet, daß zur Ausbildung einer leichten und dabei einfach anzubringenden Vorrichtung jede gelochte dünne Platte (20) mit Einrichtungen zum direkten Befestigen (11, 12, 13, 14, 15) an der Wand (10) ausgestattet ist, die einen Zwischenraum zwischen dieser Wand und der gelochten Platte aussparen, und daß die Zwischenschicht als verformbare Zwischenplatte (30) ausgebildet ist, die in dem Zwischenraum angeordnet und eingespannt ist.

2. Schalldämpfvorrichtung nach Anspruch 1, mit einer Mehrzahl von gelochten Platten (20), die jeweils zur Erhöhung des akustischen Widerstands ihrer Öffnungen (23) auf der der Wand (10) zugewandten Seite und an dem Ort jeder dieser Öffnungen (23) einen kurzen Rohrstutzen (24) trägt, dessen Bohrung die jeweilige Öffnung verlängert, um eine rohrförmige Öffnung zu bilden, dadurch gekennzeichnet, daß jede gelochte Platte (20), damit sie leicht und steif sowie schnell herstellbar ist und gute Dehnungseigenschaften besitzt, welche es ihr ermöglichen, an ihr durch Stoßbelastungen hervorgerufene starke Verformungen aufzunehmen, aus einer dünnen Folie von gepreßtem, mit Mineralfasern oder organischen Fasern verstärktem Polymerharz gebildet ist, wobei die an die genannte Folie angeformten Stutzen (24) zur Vermeidung jeder Gefahr von Rißbildung zwischen dem jeweiligen Stutzen (24) und der Folie der gelochten Platte (20) mit Fasern aus der Folienverstärkung versehen sind, die in der Masse des Stutzens übergreifen.

3. Schalldämpfvorrichtung nach Anspruch 2, dadurch gekennzeichnet, daß die Verstärkung der gelochten Platte (20) aus einem Stapel von Mineralfasermatten oder Matten aus organischen Fasern bestehen.

4. Schalldämpfvorrichtung nach Anspruch 2 oder 3, dadurch gekennzeichnet, daß jede gelochte Platte (20) auf ihrer der Wand (10) gegenüberliegenden Seite Abstandshülsen (14, 14a) aufweist, um den erforderlichen Abstand zwischen der Platte und der Wand aufrechtzuerhalten und das Durchstecken von Befestigungsschrauben (11) zu ermöglichen.

5. Schalldämpfvorrichtung nach Anspruch 4, dadurch gekennzeichnet, daß jede gelochte Platte auf ihrer mit der Gasleitung in Berührung kommenden Seite durch die Platte hindurchgeführte, verklebte Unterlegscheiben (15) aufweist, in die Abstandshülsen (14) eingreifen und sich auf der genannten abgewandten Seite durch Schultern (151) geringer Dicke abstützen, und daß die Schultern Ausfräsungen aufweisen, in die die Köpfe von Senkkopfschrauben eingelegt werden können.

6. Schalldämpfvorrichtung nach Anspruch 4, dadurch gekennzeichnet, daß die Abstandshülsen (14a) aus gepreßtem Verbundmaterial an Ort und Stelle während der Polymerisation der gelochten Platte (20) polymerisiert werden, daß jede gelochte Platte (20) an ihrer die Gasleitung berührenden Fläche mit ersten Metallnäpfchen (15a) versehen ist, die durch die Platte hindurchführen, sich mit einem Ende an den Abstandshülsen (14a) abstützen und eine Form haben, die die Aufnahme von Köpfen von Senkkopfschrauben erlauben, und daß zweite Metallnäpfchen (15b) in die Abstandshülsen (14a) eingreifen und sich an der Zwischenwand (30) abstützen.

7. Schalldämpfvorrichtung nach Anspruch 1, dadurch gekennzeichnet, daß jede Zwischenwand (30), damit sie leicht ist und einfach zwischen die Wand (10) und die gelochte Platte (20) eingespannt werden kann, aus einer dünnen Folie von Polymerharz (31) besteht, die sich an der Wand abstützt und Verstärkungsrippen (32) aufweist, deren Enden sich an der gelochten Platte abstützen, und daß diese Rippen die Resonanzhohlräume abgrenzen.

8. Schalldämpfvorrichtung nach Anspruch 7, dadurch gekennzeichnet, daß zur Herstellung eines guten Kontakts zwischen den Rippen (32) und der gelochten Platte (20), zur Erhöhung der Festigkeit der Platte gegenüber dem Aufschlagen von Fremdkörpern, die in die Gasleitung eindringen, und zum Verhindern des Zusammendrückens der Rippen bei der Montage die Ränder dieser Rippen (32) als aufliegende Ränder (35) ausgebildet sind.

9. Schalldämpfvorrichtung nach Anspruch 7 oder 8, dadurch gekennzeichnet, daß zur Erleichterung des Einspannens bei der Montage jede Zwischenwand (30) mit kurzen Rippen (33) an der Wand (10) abgestützt ist.

10. Gerät zum Herstellen einer gelochten Platte nach Anspruch 2, mit

—  einem feststehenden Formteil (50) und einem beweglichen Formteil (60) zum Einsetzen zwischen die Tische einer Kochpresse und zum Abgrenzen einer Preßformmatrize, und mit

—  einer Mehrzahl von Nadeln (80) zum Aussparen der Öffnungen in der Platte während des Formens, wenn die Form vollständig geschlossen ist, wobei jede dieser Nadeln dann den einen Formteil in einem Nadeldurchlaß durchquert, den Werkzeughohlraum durchsetzt und durch einen anderen Nadeldurchlaß in den anderen Teil der Form eindringt, dadurch gekennzeichnet, daß Einsenkungen (69) am Ausgang in der Matrize der Nadeldurchlässe des einen Formteils eingearbeitet sind, um die Formhöhlungen der Rohrstutzen (24) zu bilden.

11. Gerät nach Anspruch 10, dadurch gekennzeichnet, daß die aus Stahl bestehenden Nadeln (80) mit einer Oxid-Oberflächenschicht überzogen sind, um die Haftung eines Trennmittels zu verbessern.

12. Gerät nach Anspruch 10 oder 11, dadurch gekennzeichnet, daß es außerdem mit Mitteln (63, 90, 91) versehen ist, damit die beiden Formteile (50) und (60) in einer mittleren Schließposition gegeneinander geführt sein können, ohne daß die Nadeln (80) in den Formhohlraum eindringen.

13. Turboreaktorgebläse, dadurch gekennzeichnet, daß es mit einer Schalldämpfvorrichtung nach einem der Ansprüche 1 bis 9 versehen ist.

**Claims**

1. Sound-damping lining applied to the wall of a gas flow of the kind comprising on the one hand a plurality of thin juxtaposed perforate panels in the manner of tiles and on the other hand, between the said wall and each of the said perforate panels, an intermediate layer shaped in order to define with the said perforate panel a plurality of acoustic resonant cavities of which the acoustic vents are formed by the openings of the perforate panels, characterized in this that, in order to provide a lining which is both light and easily installed, each thin perforate panel (20) is provided with securing means (11, 12, 13, 14, 15) directly to the wall (10) defining a space between the latter and the perforate panel and in this that each immediate layer is a deformable intermediate panel (30) and is located and locked into the said space.

2. Sound-damping lining according to claim 1 comprising a plurality of perforate panels (20) each having, in oder to increase the acoustic resistance of its openings (23), on its face opposite to the wall (10) and in the region of each of these orifices (23) a short tubular sleeve (24) of which the bore extends the said orifice in order to form a tubular vent, characterized in this that in order that it should be simultaneously light, rigid, capable of being quickly manufactured, and that it has good expansion characteristics which enable it to accommodate substantial deformations under impact, each perforate panel (20) is made of a thin sheeting of moulded polymer resin reinforced with mineral or organic fibres, the sleeves (24) being made by moulding with the said sheeting and, in order to avoid any risk of fractures arising between each sleeve (24) and the sheeting of the perforate panel (20), fibres of the reinforcement of the latter extend into the thickness of the sleeve.

3. Sound-damping lining accoring to claim 2, characterized in this that the reinforcement of the perforate panel (20) is constituted by layering of layers of felt of mineral or organic fibres.

4. Sound-damping lining according to any one of claims 2 and 3, characterized in this that each perforate panel (20) carries, on its face opposite to the wall (10) cross members (14, 14a) in order to maintain the required space between the said panel and the said wall and to enable the passage of securing bolts (11).

5. Sound-damping lining according to claim 4, characterized in this that each perforate panel (20) carries, on the face in contact with the gas flow, adhesive-coated discs (15) which extend through the thickness of the panel, extending into the cross members (14) and being applied to the said opposed face at shoulders of small thickness (151), the said shoulders comprising recesses enabling the location of the heads of bolts with counted-sunk heads.

6. Sound-damping lining according to claim 4, characterized in this that the cross members (14a) of composite mouldet matereial are polymerised in situ at the same time as the polymerisation of the perforate panel (20), in this that each perforate panel (20) carries, on the face in contact with the said gas flow, first metal cups (15a) which traverse the thickness of the panel, abut at one end the cross members (14a) and have a shape enabling the location of bolt heads with counter-sunk heads and in this that the second metal sups (15b) extend into the cross members (14a) and abut the intermediate panel (30).

7. Sound-damping lining according to claim 1, characterized in this that in order that it should be light and easy to secure between the wall (10) and the perforate panel (20), each intermediate panel (30) is constituted by a thin foil of polymer resin (31) applied against the wall and having ribs (32) of which the ends are in contact with the perforate panel, these ribs defining resonant cavities.

8. Sound-damping lining according to claim 7, characterized in this that in order to ensure contact between the said ribs (32) and the perforate panel (20), in order to increase the resistance of the latter to the impact of foreign bodies entering into the gas flow and in order to avoid crushing of the ribs during assembly, the edges of these ribs (32) are bent-over edges (35).

9. Sound-damping lining according to claim 7 or claim 8, characterized in this that in order to facilitate securing during the assembly operation each intermediate panel (30) contacts the wall (10) through shallow ribs (33).

10. Tooling for the moulding of a perforate panel according to claim 2 comprising:

— a fixes mould part (50) and a movable mould part (60) to be inserted between plates of a heating press and defining a mould impression,

— a plurality of pins (80) intended to form openings of the panels during the course of moulding when the mould is completely closed, each of these pins thus traversing one of the parts of the mould through a pin passage, traversing the impression entering into the other mould part through another pin passage, characterized in this that recesses (69) are provided at the exit in the impression of the passages in the pins by one of the mould parts in order to form the mould impressions of the tubular sleeves (24).

11. Tooling according to claim 10, characterized in this that the pins (80) of steel, are covered by a superficial oxide layer in order to encourage the adherence of a demoulding agent.

12. Tooling according to claim 10 or 11, characterized in this that it comprises furthermore means (63, 90, 91) such that in an intermediate closure position, the two mould parts (50) and (60) are in contact with one another without which the pins (80) do not enter into the impression.

13. Fan passage of a turbo-jet engine, charactrized in this that it is provided with a sound-damping lining in accordance with any one of claims 1 to 9.

9

FIG.1

FIG.2

FIG: 3

FIG: 4

FIG: 5